# EUROPÄISCHE PATENTSCHRIFT

(11) **EP 3 435 053 B1**
(45) Veröffentlichungstag und Bekanntmachung des Hinweises auf die Patenterteilung: **24.06.2020**
(21) Anmeldenummer: 18185951.3
(22) Anmeldetag: 27.07.2018
(51) Int. Cl.: G01M 3/20, G01M 3/22, G01M 3/32

(54) **VERFAHREN ZUR LOKALISIERUNG VON LECKSTELLEN**
METHOD FOR LOCALIZING LEAKS
PROCÉDÉ DE LOCALISATION DE FUITES

(30) Priorität: 27.07.2017 DE 102017007149
(43) Veröffentlichungstag der Anmeldung: 30.01.2019
(73) Patentinhaber: DILO Armaturen und Anlagen GmbH, 87727 Babenhausen (DE)
(72) Erfinder: Schroff, Gerhart, 71364 Winnenden (DE)
(74) Vertreter: Patentanwälte Olbricht, Buchold, Keulertz Partnerschaft mbB

(56) Entgegenhaltungen:
- WO-A1-02/075268
- WO-A1-2010/079055
- DE-A1- 19 813 432
- DE-A1- 19 853 049
- JP-A- H09 145 585
- JP-A- 2002 062 212
- US-A- 5 889 199

## Beschreibung

Die Erfindung betrifft ein Verfahren zur lokalisierenden Dichtheitsprüfung von Behältern und/oder Gehäusen, wonach ein derartiges Prüfobjekt mit Druck beaufschlagt wird, oder bereits gegenüber der Umgebung unter erhöhtem Druck steht, so dass bei Vorhandensein eines Lecks Testfluid aus dem Prüfobjekt austritt und hieraus das Leck erkannt wird.

Zur lokalisierenden Dichtheitsprüfung von Behältern, die bei bestimmungsgemäßem Gebrauch mit einem flüssigen oder gasförmigen Medium verfüllt sind, z.B. Druckbehälter oder Rohrleitungen, ist bekannt, diese mit Druck zu beaufschlagen und mittels einer Hubvorrichtung in das Wasser eines Prüfbeckens einzutauchen. Etwaige Lecks werden von einem mit der Prüfung betrauten Beobachter anhand aufsteigender Blasen, die durch das Austreten von Druckluft an den jeweiligen Lecks entstehen, festgestellt und somit lokalisiert. Ein wesentlicher Nachteil dieses Verfahrens ist in der Tatsache zu sehen, daß beim Eintauchen des Prüflings in das Wasser des Prüfbeckens in der Regel immer Luftblasen mit verschleppt werden, welche sich dann nach einiger Zeit vom Prüfling ablösen und an die Wasseroberfläche aufsteigen. Es ist somit für den mit der Prüfung betrauten Beobachter in vielen Fällen (vor allem bei kleinen Leckagen) nahezu unmöglich, aufsteigende Blasen eindeutig einem Leck zuzuordnen, da anhand der aufsteigenden Luftblase nicht mehr zwischen einem Leck und einer verschleppten Luftblase unterschieden werden kann. Gerade diese bedienerabhängigen Fehlerquellen stellen für die industrielle Fertigung ein Problem dar. Ein weiterer Nachteil kann darin gesehen werden, dass die Prüflinge nach der Prüfung aufwendig getrocknet werden müssen.

Eine wesentlich empfindlichere Methode zur Lecklokalisation ist das sogenannte "Schnüffelverfahren". Hierbei wird der Prüfling mit dem Testfluid, meistens Helium mit Druck beaufschlagt, wobei die mit der Prüfung betraute Person den Prüfling mit einer "Schnüffel-Sonde", welche im einfachsten Fall aus einem dünnen Schlauch besteht, durch den Gas eingesaugt wird, absucht. Führt die mit der Prüfung betraute Person nun die Schnüffel-Sonde nahe genug über ein Leck hinweg, so wird etwas aus dem Leck ausgetretenes Testfluid eingesaugt und z.B. bei Helium als Testfluid, über ein als Helium-Detektor betriebenes Massenspektometer, nachgewiesen und somit das Leck erkannt. Nachteilig an diesem Verfahren ist, dass der Prüfling für die Dichtheitsprüfung mit einem Testgas bedrückt werden muss und die Konzentration des verwendeten Testgases in der Umgebung des Prüfobjektes sehr klein gehalten werden muss, da sonst die Leckstellen nicht sicher erkannt werden können. Die hierzu erforderliche Absaugung und das Testgashandling sind mit hohen Kosten verbunden. Ein weiterer wesentlicher Nachteil dieses Verfahrens kann darin gesehen werden, dass bei großen Prüflingen, bei denen eine Lecksuche einige Minuten dauern kann, oder bei großen Leckraten, das durch ein Leck austretende Testfluid, sich in der Umgebung des Prüflings verteilt und hierdurch eine Lokalisierung der Leckstelle erschwert wird, da das Testfluid dann auch an Stellen gefunden wird, an denen sich keine Leckstelle befindet.

Hiervon ausgehend liegt der Erfindung die Aufgabe zugrunde, ein Verfahren zu entwickeln, dass die Nachteile der eingangs genannten Verfahren vermeidet und es ermöglicht, eine lokalisierende Dichtheitsprüfung unter rauhen Industriebedingungen kostengünstig und voll automatisierbar durchführen zu können.

Gängige Verfahren zur Lokalisation von Leckagen sind aus DE 198 13 432 A1, US 5 889 199 A und JP 2002 062212 A bekannt.

Diese Aufgabe wird hinsichtlich des Verfahrens durch die kennzeichnenden Merkmale des Patentanspruchs 1, dem Grundgedanken nach, sowie in Ausführungsvarianten und Ausgestaltungen derselben durch die Merkmale der Unteransprüche 2 bis 6 gelöst.

Die Erfindung geht von der Erkenntnis aus, dass man, durch ein Anblasen der Oberfläche (2) des Prüfobjektes (3) mit einem Spülgas, lokal die Gaszusammensetzung in dem für die lokalisierende Dichtheitsprüfung relevanten Volumen, dem Detektionsbereich (4), definiert verändern kann. Wird das Spülgas auf das im Prüfobjekt (3) befindliche Testfluid und das das Prüfobjekt umgebende Gas oder Gasgemisch abgestimmt, so kann anhand der Gaszusammensetzung im Detektionsbereich (4) eindeutig erkannt werden, ob durch ein Leck (7) Testfluid in den Detektionsbereich (4) gelangt und hieraus das Leck erkannt werden.

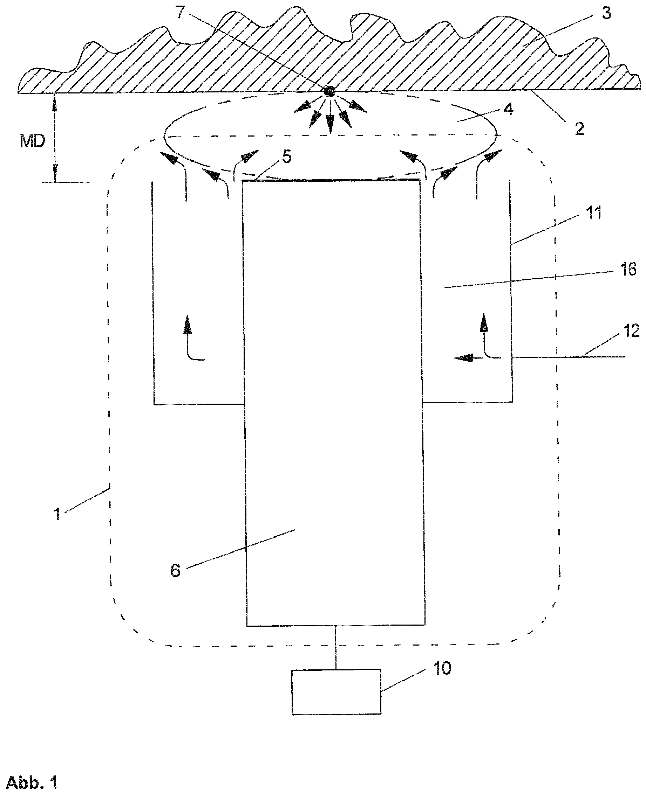

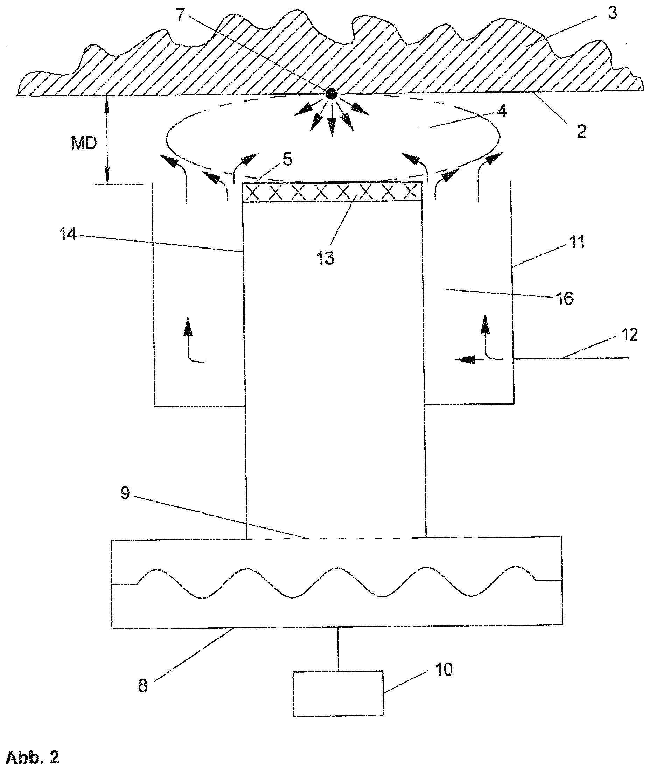

Abb.1 zeigt den schematischen Aufbau einer Messsonde (1) mit integriertem Spülrohr (11) und integriertem Gassensor (6). Abb.2 zeigt eine bevorzugte Ausführungsvariante der Erfindung anhand eines schematisch dargestellten Applikationsbeispiels.

Mittels eines, vorzugsweise als zylindrisches Rohr ausgebildeten, Spülrohres (11) wird die Oberfläche (2) des Prüfobjektes (3) lokal mit Spülgas angeblasen. Als Spülgas kann beispielsweise Helium verwendet werden. Das Spülrohr (11) wird vorzugsweise senkrecht zur Oberfläche (2) im Messabstand (MD) angeordnet. Das Spülrohr (11) ist an der vom Prüfobjekt (3) abgewandten Seite verschlossen. Über eine Leitung (12) wird Spülgas mit einem konstanten Massenstrom in das Spülrohr (11) geleitet. Das Spülgas tritt dann an dem der Oberfläche (2) des Prüfobjektes (3) zugewandten, offenen Seite des Spülrohres (11) aus und verringert, in Abhängigkeit vom gewähltem Massenstrom und dem gewählten Messabstand(MD), die Konzentration der in der Umgebung des Prüfobjektes vorhandenen Gase in dem von dem Spülgas angeblasenen Bereich, zwischen Spülrohr (11) und der Oberfläche (2) des Prüfobjektes (3). lm Folgenden wird dieser Bereich als Detektionsbereich (4) bezeichnet. Welche Konzentration, der in der Umgebung des Prüfobjektes (3) vorhandenen Gase, sich im Detektionsbereich (4) einstellt, hangt dann von dem verwendeten Spülgas (wenn dieses aus mehreren Gasen besteht, von der Zusammensetzung des Spülgases), von der Strömungsgeschwindigkeit des Spülgases durch den Spalt (mit der Spaltbreite = Messabstand (MD)) zwischen der Oberfläche (2) und Spülrohr (11) und der Diffusionsgeschwindigkeit der in der Umgebung des Prüfobjektes (3) vorhandenen Gase in dem ausströmenden Spülgas ab.

Wird Helium als Spülgas verwendet und besteht die Umgebung des Prüfobjektes (3) aus, der bei einer lokalisierenden Dichtheitsprüfung üblichen, Umgebungsluft, so können die relevanten Größen so aufeinander abgestimmt werden, dass die Heliumkonzentration im Detektionsbereich (4) bei größer 99 % liegt.

Wird nun das Spülrohr (11) im Messabstand (MD) über die Oberfläche (2) des Prüfobjektes und/oder die Oberfläche (2) über das Spülrohr (11) bewegt, ändert sich die Konzentration des Spülgases im Detektionsbereich (4) nicht. Nur wenn das Spülrohr (11) über ein Leck (7) bewegt wird, kann das aus dem Leck (7) austretende Testfluid in den Detektionsbereich (4) gelangen und hierdurch die Spülgaskonzentration im Detektionsbereich (4) verändern. Wird als Testfluid beispielsweise Druckluft verwendet und als Spülgas Helium, so veringert sich die Heliumkonzentration im Detektionsbereich(4), wenn das Spülrohr (11) über das Leck (7) bewegt wird. Zur Detektion eines Lecks (7) wird die Spülgas- und/oder Testfluidkonzentration im Detektionsbereich (4) mittels eines Gassensors (6) bestimmt (besteht das Spülgas und/oder das Testfluid aus einem Gemisch aus mehreren Gasen, so wird mittels eines Gassensors (6) die Konzentration mindestens eines dieser Gase bestimmt). Der Gassensor (6) wird dabei so auf das Spülgas und/oder das Testfluid abgestimmt, dass das gewünschte Gas (oder die gewünschten Gase) sicher detektiert werden kann (können). Als Gassensor (6) kann zum Zwecke des Spülgas- oder Testfluidnachweises jeder handelsübliche Sensor, beispielsweise ein mit einer Schnüffelsonde ausgestattetes Heliummassenspektrometer zum Heliumnachweis oder ein Wasserstoffsensor (in der Regel als Halbleitersensor realisiert) zum Wasserstoffnachweis verwendet werden.

Als Detektorfläche (5) wird im Folgenden die Eintrittsöffnung des Gassensors (6) oder die für den Gasnachweis herangezogene sensitive Fläche des Gassensors (6) bezeichnet, wenn diese an der Oberfläche des Gassensors angeordnet ist. Die Detektorfläche (5) wird innerhalb des Spülrohres (11), vorzugsweise mit einem Abstand größer gleich dem Messabstand (MD), zur Oberfläche des Prüfobjektes angeordnet.

Grundsätzlich muss das Spülgas auf das Testfluid abgestimmt werden. Vorzugsweise besteht das Spülgas im wesentlichen aus Helium oder Wasserstoff und das Testfluid aus Gasen mit einer wesentlich höheren Molmasse, wie etwa Umgebungsluft, Druckluft oder Argon. Grundsätzlich gilt: Mit zunehmendem Anteil an leichten Gasen im Spülgas und abnehmendem Anteil dieser Gase im Testfluid nimmt die Nachweisempfindlichkeit zu. Und: Mit abnehmendem Anteil an leichten Gasen im Spülgas und zunehmendem Anteil dieser Gase im Testfluid nimmt die Nachweisempfindlichkeit zu.

Besteht die Umgebung des Prüfobjektes(3) aus normaler Umgebungsluft, so können grundsätzlich Leckraten größer 10 -4 mbarl/s nachgewiesen werden. Das erfindungsgemäß vorgeschlagene Verfahren eignet sich somit als adäquater Ersatz für eine Luft-unter-Wasser-Prüfung, hat jedoch den wesentlichen Vorteil, dass es automatisierbar ist und im Prüfobjekt kein Testgas verfüllt werden muss und somit Maßnahmen zum Testgashandling und zur Absaugung von Testgas nicht erforderlich sind.

Eine bevorzugte Ausgestaltung der Erfindung (siehe hierzu Abb. 2) sieht vor, dass der Gassensor (6) mittels einer in dem Spülrohr (11), vorzugsweise als zylindrische, konzentrisch angeordneten Messleitung (14), einer porösen Membran (13) und eines Drucksensors (8) realisiert wird. Das der Oberfläche des Prüfobjektes zugewandte Ende der Messleitung (14) wird vollständig durch die poröse Membran (13) verschlossen. Die dem Detektionsbereich (4) zugewandte Oberfläche der porösen Membran (13) bildet dann die Detektorfläche (5) des Gassensors (6). Der Abstand der porösen Membran (13) zur Oberfläche des Prüfobjektes wird vorzugsweise gleich oder größer dem Messabstand (MD) gewählt. Das andere Ende der Messleitung (14) wird mit dem drucksensitiven Eingang (9) des Drucksensors (8) verbunden. Die mittlere Porengröße (MP) der porösen Membran (13) wird vorzugsweise so gewählt, dass die mittlere Porengröße (MP) kleiner oder gleich der mittleren freien Weglänge der im Detektionsbereich(4) enthaltenen Gase ist. Hierdurch wird sichergestellt, dass innerhalb der porösen Membran (13) die einzelnen Gasatome und/oder Gasmoleküle nur noch mit den Wänden der Poren der porösen Membran (13) Stöße ausführen können, nicht jedoch untereinander Stöße ausführen können. Das Strömungsverhalten innerhalb der porösen Membran (13) muss somit mittels der Molekularströmung beschrieben werden. Dieses hat zur Folge, dass Moleküle und/oder Atome mit einer kleinen Molmasse sehr viel schneller durch die poröse Membran diffundieren, als Moleküle und/oder Atome mit einer großen Molmasse. Wird beispielsweise Helium als Spülgas und Luft als Testfluid verwendet, so ergibt sich der folgende Sachverhalt: Ändert sich aufgrund eines Lecks (7) die Konzentration des Spülgases Helium im Detektionsbereich (4) so führt dieses zu einer schnellen Änderung des Heliumpartialdrucks im Inneren der Messleitung (14) und damit zu einer Änderung des Absolutdrucks im Inneren der Messleitung (14). Diese Änderung des Absolutdrucks kann dann mittels des Drucksensors (8) gemessen werden. Diese Änderung tritt jedoch nur kurzzeitig auf, da nach einer durch die Diffusionsgeschwindigkeit der Atome und Gasmoleküle des Testfluids Luft festgelegten Zeit sich wieder ein Druckausgleich zwischen dem Inneren der Messleitung (14) und dem Detektionsbereich (4) vor der porösen Membran (13) einstellt. Bestimmt man die Geschwindigkeit, mit der sich das Leck (7) relativ zur porösen Membran (13) bewegt, so kann aus der Amplitude und dem zeitlichen Verlauf der vom Drucksensor gemessenen Druckänderung die Leckrate ermittelt werden.

Die Messsonde (1) besteht in dem oben beschriebene Applikationsbeispiel aus dem Spülrohr (11), der porösen Membran (13) und der Messleitung (14). Vorzugsweise wird auch der Drucksensor (8) in der Messsonde (1) integriert. Hierdurch kann die Länge der Messleitung (14) und damit das Innenvolumen der Messleitung (14) minimiert werden und hierdurch die Ansprechzeit des Gassensors (6) minimiert und die Empfindlichkeit des Gassensors (6) maximiert werden.

Der wesentliche Vorteil eines auf diese Art und Weise realisierten Gassensors (6) kann darin gesehen werden, dass dieser eine sehr kurze Ansprechzeit, von kleiner 0,1 ms, besitzt und somit die Messsonde (1) mit einer Geschwindigkeit von bis zu 10 m/s über die Oberfläche (2) des Prüfobjektes(3) bewegt werden kann. Ein weiterer Vorteil kann darin gesehen werden, dass die Messsonde (1) auf diese Art und Weise sehr preiswert und robust realisiert werden kann. Als Material für die poröse Membran (13) kann jedes in handelsüblichen Filtern eingesetzte Filtermaterial verwendet werden, beispielsweise Sinterfilter aus Kunststoff oder Metallen oder aufgeschäumte offenporige Filter aus Kunststoff.

Eine bevorzugte Ausgestaltung der Erfindung sieht vor, dass der Drucksensor (8) mittels eines Mikrofons, vorzugsweise eines Elektretmikrofons realisiert wird. Dieses bietet den Vorteil, dass diese sehr preiswert sind, eine hohe Empfindlichkeit für den Nachweis von Druckänderungen haben und naturgemäß auch schnelle Druckänderungen hochempfindlich nachweisen können.

Eine weitere bevorzugte Ausgestaltung der Erfindung sieht vor, dass der Gassensor (6) mittels eines Drucksensors (8) und einer als semipermeable Membran ausgeführten Detektorfläche (5) ausgeführt wird und die semipermeable Membran die drucksensitive Eintrittsöffnung (9) des Drucksensors (8) vollständig bedeckt und durch die semipermeable Membran ausschließlich leichte Gase, vorzugsweise Helium und/oder Wasserstoff, permeieren können und hierdurch ein selektiver Nachweis dieser leichten Gase mittels der von dem Drucksensor (8) gemessenen Druckänderungen erfolgt und hieraus die Leckraten und/oder die räumliche Position der Leckstellen bestimmt werden.

## Patentansprüche

1. Verfahren zur Lokalisierung von Leckstellen an Behältern und/oder Gehäusen, wonach ein derartiges Prüfobjekt (3) mit einem gasförmigen Testfluid gegenüber der Umgebung mit Druck beaufschlagt ist oder wird, wobei mindestens eine Messsonde (1), über die Oberfläche (2) des Prüfobjektes (3) und/oder die Oberfläche (2) des Prüfobjektes (3) über mindestens eine Messsonde (1) bewegt wird und mittels eines Spülgases die Konzentration des Spülgases im Detektionsbereich (4) zwischen der Detektorfläche (5) eines Gassensors (6) und der Oberfläche (2) des Prüfobjektes (3) gegenüber der Umgebung erhöht wird, **dadurch gekennzeichnet, dass** bei Vorhandensein eines Lecks (7), durch das aus dem Leck (7) in den Detektionsbereich (4) austretende Testfluid, sich die Konzentration des Spülgases und/oder die Konzentration mindestens eines im Spülgas enthaltenen Gases abnimmt und diese Abnahme der Konzentration mittels des Gassensors (6) bestimmt wobei die Spülgaskonzentration im Detektionsbereich (4) mittels eines Gassensors (6) bestimmt wird und zum Zwecke der Erkennung von Leckstellen(7) am Prüfobjekt (3), vorzugsweise mittels einer Auswerteeinheit(10), ausgewertet wird und/oder hieraus die Leckraten und/oder die räumliche Position der Leckstellen bestimmt und/oder dem Anwender angezeigt werden und als Testfluid Umgebungsluft oder Druckluft verwendet wird.

2. Verfahren nach Anspruch 1, **dadurch gekennzeichnet, dass** als Spülgas Helium oder Wasserstoff oder ein Gemisch aus Helium und Wasserstoff oder ein Gemisch aus Wasserstoff und Stickstoff und/oder Argon und Wasserstoff verwendet wird.

3. Verfahren nach einem der Ansprüche 1 bis 2, **dadurch gekennzeichnet, dass** der Gassensor (6) mittels einer als porösen Membran (13), vorzugsweise mit einer mittleren Porengröße (MP) kleiner oder gleich der mittleren freien Weglänge der im Detektionsbereich (4) enthaltenen Gase, ausgebildeten Detektorfläche(5) und einem Drucksensor (8), vorzugsweise einem Elektret-Mikrofon, realisiert wird und die poröse Membran (13) den drucksensitiven Eingang (9) des Drucksensors (8) vollständig bedeckt und somit durch eine Änderung der Gaszusammensetzung im Detektionsbereich (4) vor der porösen Membran (13) eine Druckänderung am drucksensitiven Eingang (9) des Drucksensors (8) erzeugt wird und diese Druckänderung vom Drucksensor (8) gemessen und als Maß für ein Leck von einer Auswerteeinheit (10) ausgewertet und/oder dem Anwender angezeigt wird.

4. Verfahren nach Anspruch 3, **dadurch gekennzeichnet, dass** der drucksensitive Eingang (9) des Drucksensors (8), vorzugsweise als zylindrische, Messleitung (14) ausgebildet wird und das Ende der Messleitung (14) mit der porösen Membran (13), vorzugsweise mit einer mittleren Porengröße (MP) kleiner oder gleich der mittleren freien Weglänge der im Detektionsbereich (4) enthaltenen Gase, verschlossen wird und die Messleitung (14) von einem, vorzugsweise konzentrisch angeordneten zylindrischen, Spülrohr (11) umgeben wird und in den Zwischenraum zwischen Messleitung (14) und Spülrohr (11) das Spülgas, vorzugsweise mit einem konstanten Massenstrom, eingeleitet wird und hierdurch die Konzentration des Spülgases in dem Detektionsbereiche (4) erhöht wird.

5. Verfahren nach einem der Ansprüche 1 bis 4, **dadurch gekennzeichnet, dass** der Gassensor (6) mittels eines Drucksensors (8) und einer als semipermeable Membran ausgeführten Detektorfläche (5) ausgeführt wird und die semipermeable Membran die drucksensitive Eintrittsöffnung (9) des Drucksensors (8) vollständig bedeckt und durch die semipermeable Membran ausschließlich leichte Gase, vorzugsweise Helium und/oder Wasserstoff, permeieren können und hierdurch ein selektiver Nachweis dieser leichten Gase mittels der von dem Drucksensor (8) gemessenen Druckänderungen erfolgt und hieraus die Leckraten und/oder die räumliche Position der Leckstellen bestimmt werden.

6. Verfahren nach einem der Ansprüche 1 bis 5, **dadurch gekennzeichnet, dass** mehrere Gassensoren (6) in einer Messsonde (1) integriert werden.

## Claims

1. Method for locating leak points on containers and/or housings, according to which such a test object (3) has been or is pressurised with a gaseous test fluid in relation to the surroundings, wherein at least one measuring probe (1) is moved over the surface (2) of the test object (3) and/or the surface (2) of the test object (3) is moved over at least one measuring probe (1) and, by means of a flushing gas, the concentration of the flushing gas in the detection area (4) between the detector surface (5) of a gas sensor (6) and the surface (2) of the test object (3) is increased in relation to the surroundings, **characterised in that**, if there is a leak (7), due to the test fluid emerging from the leak (7) into the detection area (4), the concentration of the flushing gas and/or the concentration of at least one gas contained in the flushing gas decreases and this decrease in the concentration is determined by means of the gas sensor (6), wherein the flushing gas concentration in the detection area (4) is determined by means of a gas sensor (6) and is evaluated for the purpose of detecting leak points (7) on the test object (3), preferably by means of an evaluation unit (10), and/or on this basis the leak rates and/or the spatial position of the leak points are determined and/or displayed to the user and ambient air or compressed air is used as the test fluid.

2. Method according to claim 1, **characterised in that** helium or hydrogen or a mixture of helium and hydrogen or a mixture of hydrogen and nitrogen and/or argon and hydrogen is used as the flushing gas.

3. Method according to any of claims 1 to 2, **characterised in that** the gas sensor (6) is realised by means of a detector surface (5) formed as a porous membrane (13), preferably having a mean pore size (MP) less than or equal to the mean free path length of the gases contained in the detection area (4) and having a pressure sensor (8), preferably an electret microphone, and the porous membrane (13) completely covers the pressure-sensitive input (9) of the pressure sensor (8) and thus a pressure change at the pressure-sensitive input (9) of the pressure sensor (8) is generated by a change in the gas composition in the detection area (4) in front of the porous membrane (13) and this pressure change is measured by the pressure sensor (8) and displayed to the user and/or evaluated by an evaluation unit (10) as a measure of a leak.

4. Method according to claim 3, **characterised in that** the pressure-sensitive input (9) of the pressure sensor (8) is formed as a, preferably cylindrical, measuring line (14) and the end of the measuring line (14) is sealed with the porous membrane (13), preferably having a mean pore size (MP) less than or equal to the mean free path length of the gases contained in the detection area (4), and the measuring line (14) is surrounded by a, preferably concentrically arranged, cylindrical flushing pipe (11) and the flushing gas is introduced into the space between the measuring line (14) and the flushing pipe (11), preferably with a constant mass flow, and the concentration of the flushing gas in the detection area (4) is thereby increased.

5. Method according to any of claims 1 to 4, **characterised in that** the gas sensor (6) is embodied by means of a pressure sensor (8) and a detector surface (5) embodied as a semipermeable membrane and the semipermeable membrane completely covers the pressure-sensitive inlet opening (9) of the pressure sensor (8) and the semipermeable membrane is only permeable to light gases, preferably helium and/or hydrogen, and this results in a selective detection of these light gases by means of the pressure changes measured by the pressure sensor (8) and on this basis the leak rates and/or the spatial position of the leak points can be determined.

6. Method according to any of claims 1 to 5, **characterised in that** a plurality of gas sensors (6) are integrated into one measuring probe (1)

## Revendications

1. Procédé de localisation de points de fuite au niveau de récipients et/ou carters, selon lequel un objet à contrôler (3) de ce type est alimenté en un fluide de contrôle gazeux sous pression par rapport à l'environnement,
selon lequel au moins une sonde de mesure (1) est déplacée au-dessus de la surface (2) de l'objet à contrôler (3) et/ou la surface (2) de l'objet à contrôler (3) est déplacée au-dessus d'au moins une sonde de mesure (1) et, au moyen d'un gaz de rinçage, la concentration du gaz de rinçage dans la zone de détection (4) entre la surface de détecteur (5) d'un capteur de gaz (6) et la surface (2) de l'objet à contrôler (3) par rapport à l'environnement est augmentée,
**caractérisé en ce que**, en présence d'une fuite (7), à cause du fluide de contrôle sortant de la fuite (7) dans la zone de détection (4), la concentration du gaz de rinçage et/ou la concentration d'au moins un gaz contenu dans le gaz de rinçage diminue et cette diminution de la concentration est déterminée au moyen du capteur de gaz (6),
dans lequel la concentration de gaz de rinçage dans la zone de détection (4) est déterminée au moyen d'un capteur de gaz (6) et est évaluée, de préférence au moyen d'une unité d'évaluation (10), afin de déceler des points de fuite (7) au niveau de l'objet à contrôler (3) et/ou les taux de fuite et/ou la position spatiale des points de fuite sont déterminés et/ou présentés à l'utilisateur et de l'air ambiant ou de l'air comprimé est utilisé comme fluide de contrôle.

2. Procédé selon la revendication 1, **caractérisé en ce que** de l'hélium ou de l'hydrogène ou un mélange d'hélium et d'hydrogène et/ou d'argon et d'hydrogène est utilisé comme gaz de rinçage.

3. Procédé selon l'une quelconque des revendications 1 à 2, **caractérisé en ce que** le capteur de gaz (6) est réalisé au moyen d'une surface de détecteur (5), conçue sous la forme d'une membrane poreuse (13), de préférence avec une dimension de pore moyenne (MP) inférieure ou égale à la longueur de parcours libre moyenne des gaz contenus dans la zone de détection (4), et d'un capteur de pression (8), de préférence un microphone à électret, et la membrane poreuse (13) couvre complètement l'entrée (9), sensible à la pression, du capteur de pression (8) et une variation de pression est ainsi produite au niveau de l'entrée (9), sensible à la pression, du capteur de pression (8) par une variation de la composition gazeuse dans la zone de détection (4) devant la membrane poreuse (13) et cette variation de pression est mesurée par le capteur de pression (8) et, en tant que mesure pour une fuite, est évaluée par une unité d'évaluation (10) et/ou est présentée à l'utilisateur.

4. Procédé selon la revendication 3, **caractérisé en ce que** l'entrée (9), sensible à la pression, du capteur de pression (8) est conçue de préférence sous forme de conduite de mesure (14) cylindrique et l'extrémité de la conduite de mesure (14) est obturée avec la membrane poreuse (13), de préférence avec une dimension de pore moyenne (MP) inférieure ou égale à la longueur de parcours libre moyenne des gaz contenus dans la zone de détection (4), et la conduite de mesure (14) est entourée par un tube de rinçage (11) cylindrique, agencé de préférence de manière concentrique, et le gaz de rinçage est introduit dans l'espace entre conduite de mesure (14) et tube de rinçage (11), de préférence avec un flux massique constant, et la concentration du gaz de rinçage dans la zone de détection (4) est ainsi augmentée.

5. Procédé selon l'une quelconque des revendications 1 à 4, **caractérisé en ce que** le capteur de gaz (6) est réalisé au moyen d'un capteur de pression (8) et d'une surface de détecteur (5) conçue sous forme de membrane semi-perméable et la membrane semi-perméable couvre complètement l'ouverture d'entrée (9), sensible à la pression, du capteur de pression (8) et seuls des gaz légers, de préférence de l'hélium et/ou de l'hydrogène, peuvent passer à travers la membrane semi-perméable et une mise en évidence sélective de ces gaz légers s'effectue ainsi au moyen des variations de pression mesurées par le capteur de pression (8) et les taux de fuite et/ou la position spatiale des points de fuite sont déterminés à partir de là.

6. Procédé selon l'une quelconque des revendications 1 à 5, **caractérisé en ce que** plusieurs capteurs de gaz (6) sont intégrés dans une sonde de mesure (1).
